# EUROPÄISCHE PATENTANMELDUNG

(11) **EP 3 456 456 A1**
(43) Veröffentlichungstag der Anmeldung: **20.03.2019**
(21) Anmeldenummer: 17191949.1
(22) Anmeldetag: 19.09.2017
(51) Int. Cl.: B23K 1/19, B23K 9/23, B23K 20/12, B23K 20/233, B23K 31/12, C22F 1/04, B23K 103/10, B23K 101/18, B23K 103/12, B23K 103/20, B23K 101/00

(54) **VERFAHREN ZUR HERSTELLUNG VON TAILOR WELDED BLANKS (TWBS)**

(71) Anmelder: Universität Stuttgart, 70174 Stuttgart (DE)
(72) Erfinder: WERZ, Martin, 72581 Dettlingen (DE); WEIHE, Stefan Prof.Dr.-Ing, 85114 Buxheim (DE); EHEMANN, Lisa, 74906 Bad Rappenau (DE)
(74) Vertreter: DREISS Patentanwälte PartG mbB

(57) **Zusammenfassung**

Verfahren zur Herstellung eines Bauteilsystems (32), umfassend ein erstes Bauteil (22) mit einem ersten Bauteilabschnitt (24) und ein zweites Bauteil (26) mit einem zweiten Bauteilabschnitt (28), umfassend die folgenden Schritte: Verbinden, insbesondere Verschweißen oder Verlöten, des ersten Bauteilabschnitts (24), der aus einer kaltausgelagerten Aluminiumlegierung besteht, mit dem zweiten Bauteilabschnitt (28), der insbesondere aus einer kaltausgelagerten Aluminiumlegierung, einer Kupferlegierung oder einer Eisenlegierung, insbesondere einer Stahllegierung, besteht, unter Ausbildung einer Verbindungsnaht (30); Warmauslagern der Verbindungsnaht (30) derart, dass die Streckgrenze der Verbindungsnaht (30) über der Streckgrenze des ersten Bauteilabschnitts (24) und/oder des zweiten Bauteilabschnitts (28) liegt; und Umformen, insbesondere Tiefziehen und/oder Streckziehen, des Bauteilsystems (32).

## Beschreibung

Die Erfindung betrifft ein Verfahren zur Herstellung eines Bauteilsystems. Die Erfindung betrifft ferner ein dazugehöriges Bauteilsystem.

Temperaturangaben, die für die Erfindung von Bedeutung sind, erfolgen immer in Grad Celsius [°C]. Der Begriff "Streckgrenze" umfasst auch eine Ersatzstreckgrenze, wie z. B. die Ersatzstreckgrenze Rp0,2.

Bauteilsysteme, wie beispielsweise sogenannte Tailor Welded Blanks(TWBs) erfreuen sich im Automobilbau zunehmender Beliebtheit. TWBs werden hierbei insbesondere eingesetzt, um Umformbauteile der Karosserie mit unterschiedlichen lokalen Blechdicken und/oder Werkstoffen ausführen zu können. Hierbei werden zunächst ungeformte, flache Bleche mit nötigenfalls unterschiedlichen Dicken und/oder Werkstoffen verschweißt und anschließend gemeinsam ungeformt. Dadurch besteht die Möglichkeit ein Bauteil mit insbesondere lokal unterschiedlichen Blechdicken und/oder Werkstoffen herzustellen, so dass das Bauteil optimal an äußere Lasten anpassbar ist und somit das Bauteilgewicht optimierbar ist.

Beim Schweißen von ferritischen Stählen, wie sie heute zumeist im Fahrzeugbau eingesetzt werden, kommt es durch die schnelle Abkühlung beim Schweißprozess während der TWB-Herstellung zu einer lokalen Aufhärtung der Schweißnaht. Damit ist gemeint, dass die Schweißnaht bei entsprechend gewählten Schweißparametern eine höhere statische Festigkeit, insbesondere eine höhere Streckgrenze, hat als der umgebende Grundwerkstoff, also der unveränderte Werkstoff der Bleche. Beim Umformen derart hergestellter Stahl-TWBs lokalisiert daher die Dehnung nicht in der Verbindungsnaht und es lassen sich vergleichsweise hohe Umformgrade beispielsweise mittels eines Tiefzieh- oder Streckzieh-Vorgangs, realisieren.

Werden demgegenüber Bleche aus Stahl mit Blechen aus Aluminium oder verschiedene Bleche aus Aluminium miteinander zur Ausbildung eines Hybrid- oder Aluminium-TWBs miteinander verschweißt, ist das Verhalten beim Schweißen deutlich anders. Dies hat folgenden Hintergrund: Aluminiumlegierungen werden im Wesentlichen in die Gruppe der naturharten und aushärtbaren Aluminiumlegierungen unterteilt. Dabei resultiert die Festigkeit der naturharten Legierungen hauptsächlich aus der Mischkristallverfestigung, die gegebenenfalls durch Kaltverformung erhöht werden kann. Demgegenüber sind aushärtbare Aluminiumlegierungen mittels Aussscheidungshärtung aushärtbar. Hierbei tragen feinste Ausscheidungen zur Festigkeit bei. Diese Ausscheidungen werden folgendermaßen ausgeschieden: Zunächst wird die entsprechende Legierung aus der Schmelze abgeschreckt bzw. nach einem Lösungsglühvorgang anschließend abgeschreckt. Durch das Abschrecken wird verhindert, dass die Legierung ihr thermodynamisches Gleichgewicht erreicht. Folglich muss das Abkühlen mit einer legierungsabhängigen Mindestabkühlgeschwindigkeit bzw. unterhalb einer maximalen Abkühldauer durchgeführt werden, sodass eine kritische Abkühlgeschwindigkeit bzw. kritische Abkühldauer der Aluminiumlegierung überschritten bzw. unterschritten ist. Bei einer anschließenden Kalt- und/oder Warmauslagerung werden feinste Ausscheidungen gebildet, wobei die Legierung zum thermischen Gleichgewicht hin drängt.

Dabei hat es sich herausgestellt, dass beim Schweißen von aushärtbaren Aluminiumlegierungen, die bereits kalt-und/oder warmausgelagert sind, die Streckgrenze der Schweißnaht die Streckgrenze des die Schweißnaht umgebenden Grundwerkstoffs nicht vollständig erreicht. Folglich ist die Steckgrenze der Schweißnaht niedriger als die Streckgrenze der Umgebung. Bei einer plastischen Verformung, wie beispielsweise beim Umformprozess, lokalisiert daher die Dehnung im Bereich der Schweißnaht.

Genau dieses Problem tritt bei der TWB-Herstellung bzw. dessen Verwendung, insbesondere dessen Umformung, auf: Zwischen der Blechherstellung beim Werkstoffhersteller, wobei regelmäßig ein Lösungsglühen und anschließendes Abschrecken des Blechs nach dem Walzen durchgeführt wird, vergeht ein vergleichsweise großer Zeitraum, bis anschließend beim Zulieferer oder Automobilhersteller ein TWB aus den Blechen mittels Blechverschweißung hergestellt wird. Somit kommt es bis zur TWB-Herstellung zu einer Festigkeitssteigerung der Bleche durch Kaltauslagerung. Daraus folgt, dass die Streckgrenzen der Schweißnähte der hergestellten TWBs nicht die Streckgrenze der die Schweißnähte umgebenden Blechbereiche erreichen, da die Festigkeitssteigerung durch Kaltauslagerung der Schweißnaht zeitlich derjenigen des Grundwerkstoffs hinterherhinkt.

Die Schweißnähte können aufgrund dieser lokal geringeren Festigkeit folglich nur in Bereiche gelegt werden, die im Umformprozess vergleichsweise wenig belastet sind, sodass der Einsatzbereich von Aluminium-Stahl-Hybrid-TWBs bzw. von Aluminium-TWBs sehr begrenzt ist, während Stahl-TWBs vergleichsweise gut beherrscht werden und bereits in vielen Serienfahrzeugen, beispielsweise im Türbereich zum Einsatz kommen. Um hier eine Verbesserung zu erzielen, werden in der Forschung Werkzeuge mit zusätzlichen Stempeln zum Fixieren der Schweißnähte verwendet, um die Belastung derselben bei der Umformung zu reduzieren. Dieses Vorgehen ist allerdings sehr aufwändig und nicht bzw. nur sehr schwer und damit kostenintensiv auf komplexe Geometrien übertragbar.

Um diesem Problem zu begegnen, ist es bekannt, einen Lösungsglühschritt vor dem Umformen durchzuführen. Hierbei wird das TWB zunächst lösungsgeglüht und sodann abgeschreckt. Dieses Verfahren eignet sich allerdings zum einen nicht bei Aluminium-Stahl-Hybrid-TWBs, da sich spröde intermetallische Phasen hierbei zwischen Aluminium und Stahl aufgrund von Diffusionsprozessen bilden.

Ferner bedarf es beim Abschrecken nach dem Lösungsglühen zumeist eines Fluids. Dadurch werden die Bauteile nass und gegebenenfalls verunreinigt. Ferner hat es sich gezeigt, dass sich durch das Lösungsglühen in der Verbindungsnaht nachteilige "Blasen" bilden können, die vermutlich durch das Eintragen von Oberflächenbeschichtungen (Trockenschmiermittel, Beölung, Reinigungsmittel, usw.) während des Schweißprozesses herrühren.

Ferner hat es sich herausgestellt, dass ein Lösungsglühen mit anschließendem Abschrecken bei bereits umgeformten Bauteilen zu Verzug führt. Insbesondere bei Pressschweißverbindungen kann durch den Schweißprozess eine kritische Umformung vorliegen, sodass es während des Lösungsglühens zu einer Rekristallisation mit Kornvergröberung kommen kann und damit die Festigkeit im Bereich der Verbindungsnaht kompromittiert werden kann.

Es ist folglich Aufgabe der Erfindung, den genannten Nachteilen des Standes der Technik Abhilfe zu schaffen. Insbesondere soll mit dem Verfahren eine Möglichkeit bereitgestellt werden, bei TWBs ein Lösungsglühen mit anschließendem Abschrecken nach der TWB-Herstellung zu vermeiden.

Diese Aufgabe wird gelöst durch ein Verfahren mit den Merkmalen des Anspruchs 1.

Es ist folglich vorgesehen, dass ein Bauteilsystem, umfassend ein erstes Bauteil mit einem ersten Bauteilabschnitt und ein zweites Bauteil mit einem zweiten Bauteilabschnitt hergestellt wird. Hierzu wird zunächst der erste Bauteilabschnitt mit dem zweiten Bauteilabschnitt insbesondere mittels einer Schweißverbindung oder einer Lötverbindung verbunden. Dabei wird eine Verbindungsnaht ausgebildet. Der erste Bauteilabschnitt besteht aus einer ausscheidungshärtbaren Aluminiumlegierung, welche kalt ausgelagert ist.

Die Kaltauslagerung kann entweder als Materialbehandlungsschritt durchgeführt werden. Andererseits vergeht regelmäßig ein vergleichsweise langer Zeitraum zwischen der Herstellung des ersten Bauteils, bzw. der Herstellung von Vorstufen des ersten Bauteils, und dessen Verbindung mit dem zweiten Bauteil. So kann das erste Bauteil beispielsweise während der Lagerzeiten beim Hersteller, Zwischenhändler oder dort wo die Bauteile verbunden werden "von allein" auslagern. Die Kaltauslagerung kann folglich insbesondere während der Lagerzeiten des ersten Bauteils erfolgen.

Der zweite Bauteilabschnitt kann insbesondere metallisch sein. Dabei kann der zweite Bauteilabschnitt aus einer ausscheidungshärtbaren und insbesondere kalt ausgelagerten Aluminiumlegierung bestehen. Denkbar wäre aber auch, dass der zweite Bauteilabschnitt aus einer naturharten Aluminiumlegierung besteht.

Anderseits kann der zweite Bauteilabschnitt auch aus einer Kupferlegierung oder einer Eisenlegierung, wie beispielsweise Stahl, bestehen. Im Falle von Stahl kann es sich insbesondere um mikrolegierte Stähle, Feinkornstähle, ferritische Stähle oder austenitische Stähle handeln.

Ferner ist vorgesehen, dass die Verbindungsnaht warm ausgelagert wird und zwar derart, dass die Streckgrenze der Verbindungsnaht höher ist als die Streckgrenze des ersten Bauteilabschnitts und/oder des zweiten Bauteilabschnitts. Insbesondere ist die Streckgrenze sodann höher als die Streckgrenze beider Bauteilabschnitte.

Steigt die Streckgrenze an, so geht damit regelmäßig auch eine Festigkeitssteigerung bzw. eine Erhöhung der Härte einher. Somit kann statt des Begriffs der Streckgrenze auch der Begriff der Festigkeit und/oder der Härte verwendet werden.

Um ein Warmauslagern der Verbindungsnaht zu ermöglichen, muss die Abkühlgeschwindigkeit bzw. Abkühldauer selbstverständlich derart hoch bzw. kurz sein, dass nach dem Abkühlen (Abschrecken) kein thermodynamisches Gleichgewicht in der Verbindungsnaht vorhanden ist.

Um durch Warmauslagern der Verbindungsnaht eine über der Streckgrenze der Bauteilabschnitte liegende Streckgrenze zu erhalten wird folgender Effekt ausgenutzt: Überraschenderweise hat es sich herausgestellt, dass die Streckgrenze bei der Warmauslagerung eines nicht-kaltausgelagerten Werkstoffs insbesondere bei geringen Warmauslagerungstemperaturen schneller ansteigt als die Streckgrenze eines kaltausgelagerten Werkstoffs. Folglich überholt die zunächst vor der Wärmebehandlung niedrigere Streckgrenze eines nicht-kaltausgelagerten Werkstoffs die Streckgrenze eines kaltausgelagerten Werkstoffs nach einer gewissen Zeit der Warmauslagerung. Dabei kann entweder nur die Verbindungsnaht warmausgelagert werden. Andererseits kann auch das gesamte Bauteilsystem ausgelagert werden. In beiden Fällen kann der vorgenannte Effekt erzielt werden.

Um diesen Effekt effizient ausnutzen zu können, sollte die Verbindungsnaht noch gar nicht oder lediglich teilweise kaltausgelagert sein. Zumindest sollte der Grad der Kaltauslagerung deutlich niedriger sein als der Grad der Kaltauslagerung der umgebenden Bauteilabschnitte.

Nach dem Verbindungsvorgang ist die Verbindungsnaht nämlich "frisch". Darunter ist zu verstehen, dass diese quasilösungsgeglüht und abgeschreckt und gerade nicht kaltausgelagert ist, während die die Verbindungsnaht umgebenden beiden Bauteilabschnitte, sofern es sich hierbei um aushärtbare Aluminiumlegierungen handelt, kaltausgelagert sind. Folglich weist die Verbindungsnaht innerhalb eines gewissen Warmauslagerungszeitraums, nämlich solange die Verbindungsnaht noch nicht überaltert ist, eine höhere Streckgrenze auf als das umgebende Grundmaterial. Die Überalterung kann beispielsweise dadurch verhindert werden, dass die Schweiß- oder Lötgeschwindigkeit beim Herstellen der Verbindungsnaht oberhalb einer kritischen Schweiß- oder Lötgeschwindigkeit liegt.

Ferner umfasst das Verfahren den weiteren Schritt c., bei dem das mit den Schritten a. und b. hergestellte Bauteilsystem umgeformt wird. Das Umformen kann insbesondere mittels Tiefziehen und/oder Streckziehen durchgeführt werden. Das hergestellte Bauteilsystem kann folglich insbesondere kaltverformt werden. Eine Erwärmung zur Umformung ist nicht notwendig, sodass weitere Energie eingespart werden kann und die Produktivität weiter erhöht werden kann. Dadurch, dass die Streckgrenze der Verbindungsnaht höher ist als diejenige der die Verbindungsnaht umgebenden Bauteilabschnitte (bzw. wenigstens des ersten Bauteilabschnitts), jedenfalls soweit diese aus einer Aluminiumlegierung bestehen, kann zudem ein weiterer im Folgenden ausgeführter Effekt erreicht werden: Wird nämlich das Bauteilsystem umgeformt, so dehnt sich die Verbindungsnaht beim Umformvorgang weniger als die umgebenden Bereiche des Grundwerkstoffs, insbesondere falls die Bauteile Bleche sind. Somit ist die Verbindungsnaht nach dem Umformvorgang etwas dicker als die umgebenden Bereiche. Durch die lokale Verdickung wird die Verbindungsnaht folglich weniger stark belastet und ist betriebssicherer. Dies steht im krassen Gegensatz zum Stand der Technik, wo die Verbindungsnaht die Schwachstelle der bekannten Bauteilsysteme darstellt.

Insgesamt kann mit der Erfindung der Effekt erzielt werden, dass die Verbindungsnaht im Gegensatz zum Stand der Technik nicht mehr eine geringere Streckgrenze oder Festigkeit als das die Verbindungsnaht umgebende Grundmaterial aufweist. Folglich lokalisiert die Dehnung nicht mehr in der Verbindungsnaht, sodass eine vergleichsweise große Umformbarkeit des Bauteils gegeben ist. Ferner muss das Bauteil nach dem Schweißen nicht mehr lösungsgeglüht werden. Dadurch kann zum einen ein Verzug verhindert werden. Zum anderen kann Energie eingespart werden, da das Lösungsglühen deutlich mehr Energie verlangt als ein Warmauslagerungsvorgang. Schließlich kann eine Verunreinigung der Bauteile durch den Abschreckvorgang beim Lösungsglühen verhindern werden. Ferner können komplexe und teure Stempel zur Vermeidung von Dehnungslokalisierung in Umformwerkzeugen vollständig entfallen. Insgesamt kann die Produktivität gesteigert werden.

Der erste Bauteilabschnitt kann die gleiche oder unterschiedliche Dicke wie der zweite Bauteilabschnitt aufweisen. Insbesondere kann der zweite Bauteilabschnitt gleich dick oder dünner wie der erste Bauteilabschnitt sein.

Das erste Bauteil kann insbesondere für mindestens zwei Tage, vorzugweise mindestens 10 Tage, weiter vorzugsweise mindestens 30 Tage kaltausgelagert worden sein bevor die Verbindung mit dem zweiten Bauteil hergestellt wird. Eine Kaltauslagerung während dieses Zeitraums stellt sicher, dass ein ausreichender Kaltauslagerungsgrad des ersten Bauteilabschnitts erreicht ist.

Die Dehnungen im ersten und/oder zweiten Bauteilabschnitt können lokal nach dem Umformen insbesondere mehr als 5%, vorzugsweise mehr als 10%, weiter vorzugsweise mehr als 15%, bezogen auf mindestens die fünffache Bauteilabschnittsdicke betragen.

Zusätzlich oder alternativ können die Dehnungen im ersten und/oder zweiten Bauteilabschnitt lokal nach dem Umformen quer zur Verbindungsnaht mehr als 5%, vorzugsweise mehr als 10%, weitere vorzugsweise mehr als 15%, bezogen auf die dreifache, fünffache oder zehnfache Verbindungsnahtbreite betragen.

Vorzugsweise ist in Schritt a. die Abkühlgeschwindigkeit zumindest innerhalb eines Temperaturabschnitts, insbesondere im Temperaturbereich zwischen 400°C und 200°C, höher als die kritische Abkühlgeschwindigkeit der Aluminiumlegierung des ersten Bauteilabschnitts und/oder des zweiten Bauteilabschnitts, falls dieser ebenfalls aus einer aushärtbaren Aluminiumlegierung hergestellt ist. Zusätzlich oder alternativ kann die Abkühldauer im vorgenannten Temperaturbereich kürzer als die kritische Abkühldauer sein. Mit kritischer Abkühldauer bzw. kritischer Abkühlgeschwindigkeit ist gemeint, dass bei einer kürzeren Dauer bzw. einer höheren Geschwindigkeit als diese kritischen Grenzwerte die Aluminiumlegierung derart abgekühlt wird, dass sich kein thermodynamisches Gleichgewicht einstellen kann, sondern ein möglichst homogen übersättigter Mischkristall erzeugt wird. Damit ist bei einem anschließenden Warmauslagerungsvorgang eine Ausscheidungshärtung ermöglicht.

Um die kritische Abkühlgeschwindigkeit zu erzielen und damit insbesondere eine Überalterung der die Verbindungsnaht umgebenden Bauteilabschnitte zu vermeiden, liegt die Schweißgeschwindigkeit vorteilhafterweise bei größer 100 mm/min, insbesondere größer 250 mm/min weiter insbesondere größer 1000 mm/min.

Vorteilhafterweise ist der Zeitraum zwischen Schritt a. und Schritt b., dem Warmauslagern, kürzer als zehn Tage. Insbesondere ist der Zeitraum kürzer als zwei Tage, weiter insbesondere weniger als 2 Stunden, weiter insbesondere weniger als 10 Minuten. Je kürzer der Zeitraum desto geringer ist der Grad der in der Verbindungsnaht vorhandenen Kaltauslagerung. Dadurch kann der oben beschriebene Effekt, nämlich der Unterschied in der Streckgrenzenänderung gegenüber der Zeit, beim Warmauslagerungsvorgang eines nicht-kaltausgelagerten Werkstoffs gegenüber der eines kaltausgelagerten Werkstoffs, optimal ausgenutzt werden.

Vorteilhafterweise ist der Zeitraum in Schritt a., in dem ein Verbindungsnahtabschnitt 250°C überschreitet kürzer als 200 Sekunden, insbesondere kürzer als 30 Sekunden und weiter insbesondere kürzer als 10 Sekunden. Dadurch kann insbesondere verhindert werden, dass der die Verbindungsnaht umgebende Werkstoff überaltert.

Es hat sich herausgestellt, dass die Auslagerungstemperatur in Schritt b. 60 bis 220°C vorzugsweise betragen sollte. Insbesondere sollte die Temperatur 80 bis 200°C, weiter insbesondere 110 bis 170°C betragen. Dadurch kann eine besonders wirtschaftliche Auslagerungszeit erzielt werden. Ferner stellt sich so in den die Verbindungsnaht umgebenden Grundwerkstoffen eine lediglich geringe Steigerung der Streckgrenze ein, während der Zuwachs in der Verbindungsnaht erheblich ist. Beispielsweise kann bei der Warmauslagerung die Steigerung der Streckgrenze des Grundwerkstoffs weniger als 30%, insbesondere weniger als 15%, betragen, während die Steigerung in der Streckgrenze in der Verbindungsnaht deutlich höher liegen kann.

Der erste Bauteilabschnitt und/oder der zweite Bauteilabschnitt kann bzw. können in Schritt a. eine Temperatur zwischen -30 und 200°, insbesondere zwischen 20° und 160°, weitere insbesondere zwischen 60° und 130° aufweisen.

In Schritt b. kann einerseits ausschließlich die Verbindungsnaht warmausgelagert werden. Dabei können in Schritt b. die an die Verbindungsnaht angrenzenden Bauteilabschnitte der beiden Bauteile gekühlt werden.

Andererseits ist auch denkbar, dass die beiden Bauteilabschnitte während des Schritts a. Temperaturen zwischen 60° und 130° aufweisen. Somit ist denkbar, dass sich die Schritte a. und b. zeitlich überlappen. Ist nämlich ein Verbindungsnahtabschnitt hergestellt, so wird sich dieser sodann auf die Temperatur der umgebenden Bauteilabschnitte abkühlen. Weisen die Bauteilabschnitte erhöhte Temperaturen auf, so kann folglich die Warmauslagerung in Schritt b. direkt an die Herstellung des Verbindungsnahtabschnitts erfolgen.

Vorteilhafterweise umfasst das Verfahren zudem den weiteren Schritt d., nämlich das Warmauslagern des gesamten Bauteilsytems. Dadurch kann nun in diesem zweiten Warmauslagerungsschritt die Festigkeit des gesamten Bauteilsystems gesteigert werden. Erst nach dem Umformvorgang wird folglich die gewünschte Endfestigkeit eingenommen. Denkbar ist hierbei, dass der Schritt d. im Zuge einer nachgelagerten Einbrennlackierung durchgeführt wird, bei der große Mengen Wärme in des Bauteilsystem einführbar sind, sodass die entstehende Wärme optimal ausnutzbar ist.

Der Schweißvorgang in Schritt a. kann insbesondere mittels Rührreibschweißen, Laserschweißen oder Elektronenstrahlschweißen durchgeführt werden. Diese Schweißverfahren haben sich als besonders geeignet zur Verbindung der beiden Bauteilabschnitte herausgestellt.

Rührreibschweißen hat sich als besonders vorteilhaft erwiesen, da die Werkstoffe beim Schweißvorgang nicht aufgeschmolzen werden, sodass sich kein Erstarrungsgefüge ausbildet. Ferner sind der Wärmeeintrag und die Maximaltemperatur vergleichsweise gering, sodass ein Überaltern der hergestellten Schweißnaht, bzw. der direkt angrenzenden Bereiche, verhindert werden kann.

Dadurch kann eine hohe Festigkeit der Verbindungsnaht erzielt werden. Gleichzeitig kann ein gleichmäßiger Übergang von der Verbindungsnaht bzw. eine sehr flache Verbindungsnaht erzielt werden.

In vorteilhafter Weise wird in Schritt a. die Verbindungsnaht im Nachlauf gekühlt. Alternativ oder zusätzlich kann diese auch im Nahtvorlauf und/oder seitlich gekühlt werden. Dadurch kann insbesondere das Abschrecken der Verbindungsnaht sichergestellt werden, sodass anschließend eine Warmauslagerung möglich ist. Die Abkühlung kann dabei beispielsweise mittels Wasser, Druckluft, Kupferplatten, oder Sprühnebel erfolgen.

Die Auslagerungstemperatur in Schritt d. kann insbesondere größer sein als die Auslagerungstemperatur in Schritt b. Alternativ oder zusätzlich kann auch die Auslagerungsdauer in Schritt d. größer sein als die Auslagerungsdauer in Schritt b. Hierdurch wird eine wesentliche Festigkeitssteigerung des Bauteils auch außerhalb der Verbindungsnaht erzielt und zwar erst dann, wenn das Bauteilsystem umgeformt ist. Bei einer höheren Temperatur wirkt die Wärmebehandlung gleichmäßiger auf Schweißnaht und Bauteil, sodass es sinnvoll ist, in Schritt d. eine höhere Temperatur als in Schritt a. zu wählen.

Bei dem ersten und/oder zweiten Bauteil kann es sich insbesondere um Halbzeuge handeln. Insbesondere kann es sich bei den Halbzeugen um Bleche handeln. Aus diesen Blechen können insbesondere sogenannte TWBs mittels des erfindungsgemäßen Verfahrens hergestellt werden. Die Bleche können die gleiche oder unterschiedliche Dicke aufweisen. Insbesondere kann das zweite Blech gleich dick oder dünner wie das erste Blech sein.

Der erste Bauteilabschitt besteht vorzugsweise aus einer AlSiMg-, einer AlCu- oder einer AlZn-Legierung. Zusätzlich oder alternativ, kann auch der zweite Bauteilabschnitt, falls er aus einer Aluminiumlegierung hergestellt ist, aus vorgenannten Legierungen bestehen. Bei der AlSiMg-Legierung beträgt der Si-Anteil insbesondere 0,1 bis 2,0 Gew% und/oder der Mg-Anteil 0,1 bis 2,0 Gew%. Im Falle einer AlCu-Legierung beträgt der Cu-Anteil insbesondere 0,5 bis 8 Gew%. Im Fall einer AlZn-Legierung beträgt der Zn-Anteil insbesondere 2 bis 8 Gew%.

Die Aufgabe wird auch gelöst durch ein Bauteilsystem hergestellt mittels eines erfindungsgemäßen Verfahrens. Es ist folglich vorgesehen, dass ein erstes Bauteil mit einem zweiten Bauteil verbunden wird, wobei des erste Bauteil einen aus einer kaltausgelagerten Aluminiumlegierung bestehenden ersten Bauteilabschnitt umfasst, und wobei das zweite Bauteil einen aus einer kaltausgelagerten Aluminiumlegierung oder einer Eisenlegierung insbesondere Stahl, bestehenden zweiten Bauteilabschnitt umfasst, wobei die Bauteile gemäß den erfindungsgemäßen Schritten verbunden werden. Aufgrund dieses speziellen Herstellungsverfahrens wird insbesondere eine Verbindungsnaht-Streckgrenze erzielt, die höher ist als die Streckgrenze der die Verbindungsnaht umgebenden Grundwerkstoffe.

Insbesondere kann das Bauteilsystem hierbei als Tailor Welded Blank (TWB)vorliegen, wobei folglich das erste und/oder zweite Bauteil als Bleche ausgebildet ist bzw. sind. Insbesondere liegen beide Bauteile als Bleche vor, wobei die Blechdicken insbesondere zwischen 0,3 und 5,0 mm betragen können.

Weiter vorteilhafte Ausgestaltungen der Erfindung sind der nachfolgenden Figurenbeschreibung zu entnehmen, anhand derer ein Ausführungsbeispiel der Erfindung näher dargelegt wird.

Es zeigen:
- Figur 1: Darstellung der Streckgrenzenänderung während der Warmauslagerung gegenüber der Zeit einer kaltausgelagerten bzw. nichtkaltausgelagerten Aluminiumlegierung;
- Figur 2: schematische Darstellung einer möglichen Ausgestaltung der Warmauslagerung der Verbindungsnaht; und
- Figur 3: schematische Darstellung des Bauteilsystems nach der Umformung.

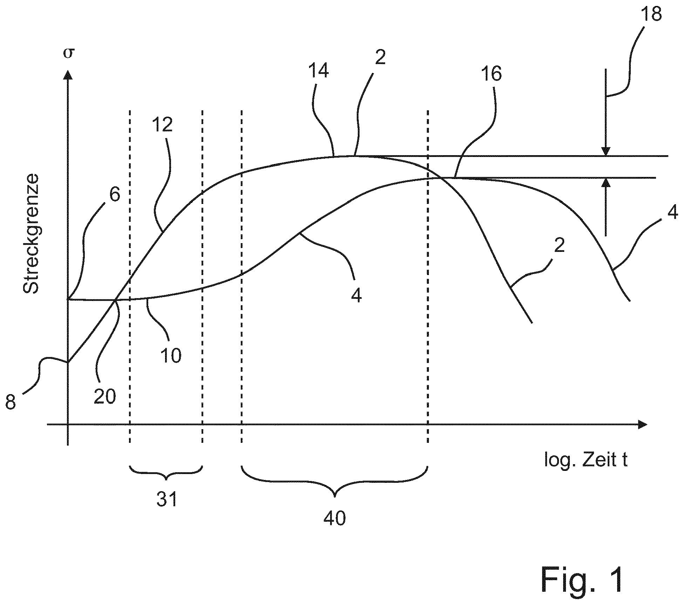

Der vorliegenden Erfindung liegt ein Effekt zu Grunde, der anhand der Figur 1 näher dargestellt wird. Figur 1 zeigt auf der x-Achse die Zeit t logarithmisch dargestellt. Ferner ist auf der y-Achse die Festigkeit bzw. Streckgrenze Re dargestellt. Die Zeit t gibt diejenige Zeitdauer an, die ein Werkstoff warmausgelagert wurde. Ferner sind zwei Kurven gezeichnet, die die Entwicklung der Streckgrenze einer AlMgSi-Legierung während des Warmauslagerns zwischen 80°C und 180°C zeigen. Die Kurve 2 stellt dabei den Streckgrenzenverlauf einer Probe dar, die vor dem Warmauslagern nicht-kaltausgelagert wurde. Die Probe der Kurve 2 wurde zunächst lösungsgeglüht und dann abgeschreckt. Die Kurve 4 zeigt demgegenüber den Streckgrenzenverlauf einer Probe, die nach dem Lösungsglühen und Abschrecken zunächst kaltausgelagert wurde. Dabei zeigt sich, dass die kaltausgelagerte Probe vor der Wärmebehandlung eine höhere Streckgrenze 6 aufweist als die nicht-kaltausgelagerte Probe, deren Streckgrenze 8 niedriger liegt. Zu Beginn der Wärmebehandlung verbleibt die kaltausgelagerte Probe dann zunächst auf einem annähernd gleichbleibendem Plateau 10, während die nicht-kaltausgelagerte Probe in der logarithmischen Darstellung einem relativ steilen quasi linearen Streckgrenzenanstieg 12 unterliegt. Am Schnittpunkt 20 der in einem recht frühen Stadium der Wärmebehandlung liegt, "überholt" die Streckgrenze der nicht-kaltausgelagerten Probe folglich diejenige der kaltausgelagerten Probe. Die maximale Streckgrenze 14 erreicht die nicht-kaltausgelagerte Probe dann auch früher als das die kaltausgelagerte Probe, welche die maximale Streckgrenze 16 erreicht. Zudem ist die maximal erreichbare Streckgrenze 14 der nicht-kaltausgelagerten Probe höher als die der kaltausgelagerten Probe, was durch die den Doppelpfeil 18 gezeigt ist. Dieser Effekt tritt bei anderen aushärtbaren Aluminiumlegierungen gleichermaßen auf.

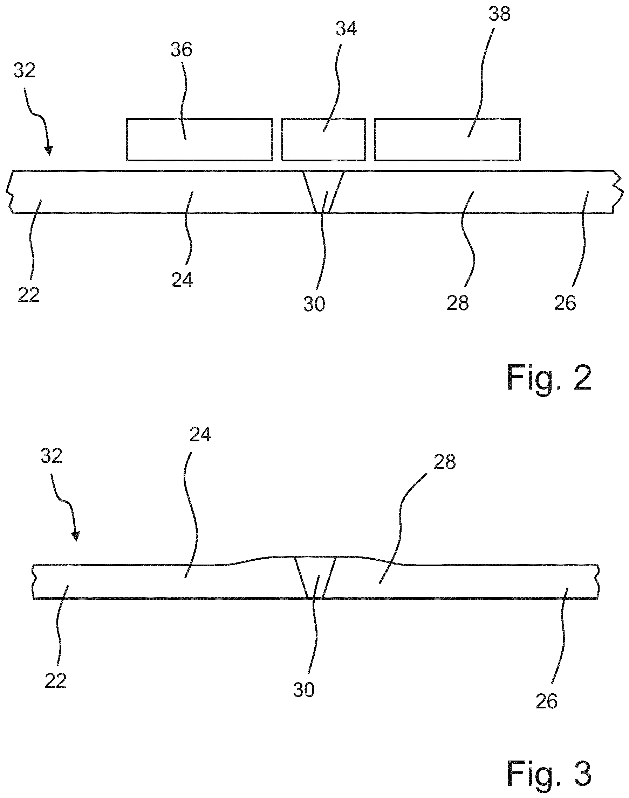

Dieser Effekt wird in vorliegender Erfindung ausgenutzt, was anhand der Figuren 2 und 3 im Folgenden dargestellt wird. Figur 2 zeigt zunächst ein erstes Bauteil 22 mit einem ersten Bauteilabschnitt 24. Dieses erste Bauteil 22 liegt als Blech vor und ist durchgehend aus einer Aluminiumlegierung, wie beispielsweise einer AlMgSi-Legierung hergestellt. Bei der AlMgSi-Legierung kann insbesondere gelten, dass der Si-Anteil bei 0,1 bis 2,0 Gew% liegt und dass der Mg-Anteil bei 0,1 bis 2,0 Gew% liegt. In diesem Fall besteht das komplette Blech aus dieser Legierung. Denkbar wäre allerdings auch, dass nur der erste Bauteilabschnitt 24, also der Bereich, in dem die spätere Verbindungsnaht liegt, aus dieser Legierung besteht. Ferner ist ein zweites Bauteil 26 mit einem zweiten Bauteilabschnitt 28 gezeigt. Bei diesem Bauteil 26 kann es sich einerseits insbesondere um ein Stahlblech handeln. Andererseits kann es sich ebenfalls um ein Blech handeln, welches aus einer Aluminiumlegierung, wie beispielsweise einer AlMgSi-Legierung, hergestellt ist, insbesondere mit einer anderen Zusammensetzung. Die Bauteile 22, 26 können die gleiche oder unterschiedliche Dicke aufweisen. Denkbar ist insbesondere, dass die Bauteile 22 und 26 unterschiedliche Dicken aufweisen. Insbesondere kann das Bauteil 26 gleich dick oder dünner als das Bauteil 22 sein. Der erste Bauteilabschnitt 24 besteht aus einer Aluminiumlegierung, die kaltausgelagert ist. Sofern auch der zweite Bauteilabschnitt 28 aus einer kaltauslagerbaren Aluminiumlegierung besteht, ist diese ebenfalls kaltausgelagert.

Die beiden Bauteile 22, 26 sind mittels einer Verbindungsnaht 30 miteinander verbunden. Insbesondere kann es sich bei der Verbindungsnaht 30 um eine Schweißnaht handeln, die beispielsweise mittels Rührreibschweißen, Laserschweißen oder Elektronenstrahlschweißen hergestellt sein kann. Während des Verbindungsvorgangs findet im Zuge der Wärmeeintragung ein Lösungsglühen der Verbindungsnaht 30 statt. Ferner wurde die Abkühlgeschwindigkeit während des Schweißprozesses derart gewählt (insbesondere durch eine ausreichend hohe Schweißgeschwindigkeit[mm/min]), dass diese größer ist als die kritische Abkühlgeschwindigkeit, sodass ein Abschreckprozess vorliegt und die Verbindungsnaht vollständig oder teilweise nicht im thermodynamischen Gleichgewicht ist. Dabei kann die Verbindungsnaht gegebenenfalls während des Schweißvorgangs im Nachlauf und/oder Nahtvorlauf und/oder seitlich durch Wasser, Druckluft, Kupferplatten, Sprühnebel oder ähnliches gekühlt werden. Gegebenenfalls können auch die die Verbindungsnaht 30 umgebenden Bauteilabschnitte 24, 28 gekühlt werden, um zu verhindern, dass außerhalb der Verbindungsnaht ein Lösungsglühen oder gegebenenfalls eine Warmauslagerung stattfindet. Die Zeit, in der ein Punkt in der Verbindungsnaht während des Verbindungsprozesses 250°C überschreitet, ist insbesondere kleiner als 200 Sekunden. Ferner kann insbesondere im Temperaturbereich zwischen 400 und 200°C die Abkühlgeschwindigkeit größer als die kritische Abkühlgeschwindigkeit sein. Wird ein Schweißverfahren verwendet, so sollte die Schweißgeschwindigkeit insbesondere größer als 100 mm/min sein.

Nach einer kurzen Zeitdauer, wie beispielsweise maximal 10 min., wird das so hergestellte Bauteilsystem 32 einer Wärmenachbehandlung unterzogen. Dabei wird die Verbindungsnaht 30 mittels eines Erwärmungsmittels 34 erwärmt. Bei dem Erwärmungsmittel 34 kann es sich beispielsweise um eine Gasflamme, eine induktive Heizung oder ein Strahlungsmittel, wie einen Laserstrahl oder einen Elektronenstrahl, handeln. Mittels der Kühlelemente 36, 38 bei denen es sich beispielsweise um Kupferplatten handeln kann, können die Bauteilabschnitte 24, 28 effizient gekühlt werden. Gegebenenfalls können diese auch von beiden Seiten gekühlt werden.

Die erste Warmauslagerung dauert zwischen 10 Minuten und 20 Stunden, insbesondere zwischen 20 Minuten und 2 Stunden.

In diesem Zusammenhang wird nun der in Figur 1 gezeigte Effekt ausgenutzt. Der Zustand der Verbindungsnaht 30 entspricht dem der nicht-kaltausgelagerten Probe(Kurvenverlauf 2). Sie ist folglich lösungsgeglüht und abgeschreckt und noch nicht kaltausgelagert. Die Bauteilabschnitte 24, 28 sind demgegenüber kaltausgelagert und entsprechen dem Verlauf der Kurve 4. Während der Warmauslagerung gemäß Figur 2 härtet folglich die Verbindungsnaht 30 aus und deren Streckgrenze überholt recht rasch die Streckgrenze der Bauteilabschnitte 24, 28, wie in Figur 1 zu sehen ist. Dieser Wärmebehandlungsvorgang findet folglich im Bereich 31 der Figur 1 statt.

Im Gegensatz zum Stand der Technik weist die Verbindungsnaht somit eine höhere oder nahezu identische Streckgrenze/Festigkeit auf als die Bauteilabschnitte 24, 28.

In einem nächsten Schritt kann nun das Bauteilsystem 32 umgeformt werden. Das Bauteilsystem 32 stellt hierbei ein TWB dar. Anstatt nur zwei Bauteile 22, 26 zu verwenden, können selbstverständlich noch weitere Bauteile aneinander geschweißt werden.

Wird die Verbindungsnaht 30 mittels eines Schweißvorgangs hergestellt, so sind hinsichtlich der Schweißkonfiguration beispielsweise Stumpfstoßverbindungen, Überlappverbindungen oder auch kombinierte Überlapp-Stumpfstoßverbindungen möglich.

Das Umformen kann beispielsweise mittels Tiefziehen oder Streckziehen durchgeführt werden und somit insbesondere als Kaltumformvorgang vorliegen.

Wie in Figur 3 schematisch gezeigt ist, ist die Verbindungsnaht 30, ebenfalls im Gegensatz zum Stand der Technik, nach dem Unformen dicker als die Blechdicke der Bauteile 22 und/oder 26. Dies deswegen, da die Streckgrenze der Verbindungsnaht 30 höher ist als die der Bauteilabschnitte 24, 28. Eine Dehnung lokalisiert folglich gerade nicht in der Verbindungsnaht 30. Die Verbindungsnaht 30 ist damit weniger stark belastet als im Stand der Technik und trägt somit zu einer Erhöhung der Betriebssicherheit bei.

In einem abschließenden Schritt kann nun das gesamte Bauteilsystem 32, in diesem Fall das TWB, einer zweiten Warmauslagerung unterzogen werden. Dabei wird das gesamte Bauteilsystem warmausgelagert und damit die Festigkeit gesteigert. Dieser Schritt kann beispielsweise im Zuge eines Lackeinbrennungsvorgangs durch die dabei eingebrachte Wärme erfolgen. Diese Warmauslagerung erfolgt vorzugsweise in dem Zeitraum 40 gemäß Figur 1, so dass sowohl die Verbindungsnaht 30 als auch die Bauteile 22, 26 in der Nähe der maximalen Streckgrenze liegen oder zumindest eine wesentliche Festigkeit- bzw. Streckgrenzensteigerung erfahren. Damit werden die vorteilhaften gewünschten Materialeigenschaften erreicht. Hierbei kann insbesondere die Temperatur in diesem zweiten Warmauslagerungsvorgang höher sein als die im Warmauslagerungsvorgang der Verbindungsnaht.

Die zweite Warmauslagerung dauert zwischen 5 Minuten und 10 Stunden, insbesondere zwischen 10 Minuten und einer Stunde.

Insgesamt wird vorliegend ein System bereitgestellt, bei dem auf ein Lösungsglühen nach dem Verschweißen zweier Bauteile 22, 26 verzichtet werden kann und somit die dabei entstehenden unerwünschten Nebenwirkungen ausgeschlossen werden können. Dennoch kann ein hoher Umformungsgrad bereitgestellt werden.

## Patentansprüche

1. Verfahren zur Herstellung eines Bauteilsystems (32), umfassend ein erstes Bauteil (22) mit einem ersten Bauteilabschnitt (24) und ein zweites Bauteil (26) mit einem zweiten Bauteilabschnitt (28), umfassend die folgenden Schritte:
a. Verbinden, insbesondere Verschweißen, Rührreibschweißen oder Verlöten, des ersten Bauteilabschnitts (24), der aus einer kaltausgelagerten Aluminiumlegierung besteht, mit dem zweiten Bauteilabschnitt (28), der insbesondere aus einer Aluminiumlegierung, einer Kupferlegierung oder einer Eisenlegierung, insbesondere einer Stahllegierung, besteht, unter Ausbildung einer Verbindungsnaht (30);
b. Warmauslagern der Verbindungsnaht (30) derart, dass die Streckgrenze der Verbindungsnaht (30) über der Streckgrenze des ersten Bauteilabschnitts (24) und/oder des zweiten Bauteilabschnitts (28) liegt; und
c. Umformen, insbesondere Tiefziehen und/oder Streckziehen, des Bauteilsystems (32).

2. Verfahren nach Anspruch 1, wobei in Schritt a. die Abkühlgeschwindigkeit und/oder die Abkühldauer zumindest innerhalb eines Temperaturabschnitts, insbesondere im Temperaturbereich zwischen 400°C bis 200°C, höher als die kritische Abkühlgeschwindigkeit bzw. kürzer als die kritische Abkühldauer der Aluminiumlegierung des ersten Bauteilabschnitts (24) und/oder des zweiten Bauteilabschnitts (28) ist.

3. Verfahren nach einem der vorhergehenden Ansprüche, wobei der Zeitraum zwischen Schritt a. und Schritt b. weniger als 10 Tage, insbesondere weniger als 2 Tage, weiter insbesondere weniger als 2 Stunden, weiter insbesondere weniger als 10 Minuten beträgt, weiter insbesondere weniger als 5 Minuten beträgt, weiter insbesondere weniger als 3 Minuten beträgt.

4. Verfahren nach einem der vorhergehenden Ansprüche, wobei in Schritt a. der Zeitraum, in dem die Temperatur eines Verbindungsnahtabschnitts beim Verbindungsvorgang 250°C überschreitet kürzer als 200 Sekunden, insbesondere kürzer als 30 Sekunden, weiter insbesondere kürzer als 10 Sekunden ist.

5. Verfahren nach einem der vorhergehenden Ansprüche, wobei die Auslagerungstemperatur in Schritt b. 60°C bis 220°C, insbesondere 80°C bis 200°C, weiter insbesondere 110°C bis 170°C beträgt.

6. Verfahren nach einem der vorhergehenden Ansprüche, wobei der erste Bauteilabschnitt (24) und/oder der zweite Bauteilabschnitt (28) in Schritt a. eine Temperatur zwischen -30°C und 200°C, insbesondere zwischen 20°C und 160°C, weitere insbesondere zwischen 60°C und 130°C aufweist bzw. aufweisen.

7. Verfahren nach einem der vorhergehenden Ansprüche, wobei in Schritt b. ausschließlich die Verbindungsnaht warmausgelagert wird.

8. Verfahren nach einem der vorhergehenden Ansprüche, wobei in Schritt b. die an die Verbindungsnaht (30) angrenzenden Bauteilabschnitte (24, 28) der beiden Bauteile (22, 26) gekühlt werden.

9. Verfahren nach einem der vorhergehenden Ansprüche, umfassend den weiteren Schritt:
d. Warmauslagern des Bauteilsystems (32), wobei dieser Schritt insbesondere mittels eines Lackeinbrennungsvorgangs in das Bauteilsystem (32) erfolgt.

10. Verfahren nach einem der vorhergehenden Ansprüche, wobei in Schritt a. die Verbindungsnaht (30) im Nachlauf und/oder im Nahtvorlauf und/oder seitlich gekühlt wird.

11. Verfahren nach einem der Ansprüche 9 bis 10, wobei in Schritt d. die Auslagerungstemperatur und/oder die Auslagerungsdauer größer als die Auslagerungstemperatur bzw. Auslagerungsdauer in Schritt b. ist bzw. sind.

12. Verfahren nach einem der vorhergehenden Ansprüche, wobei das erste Bauteil (22) und/oder das zweite Bauteil (26) als Halbzeug, insbesondere Blech, ausgebildet ist bzw. sind.

13. Verfahren nach einem der vorhergehenden Ansprüche, wobei der erste Bauteilabschnitt (24) und/oder der zweite Bauteilabschnitt (28) aus einer AlSiMg-, einer AlCu- oder einer AlZn-Legierung besteht.

14. Bauteilsystem (32), hergestellt mittels eines Verfahrens nach einem der vorhergehenden Ansprüche.

15. Bauteilsystem (32) nach Anspruch 14, wobei das System als Taylor Welded Blank, hergestellt mittels eines Verfahrens nach einem der vorhergehenden Ansprüche, ausgebildet ist, und wobei das erste Bauteil (22) und/oder das zweite Bauteil (26) als Blech ausgebildet ist.
